# EUROPÄISCHE PATENTANMELDUNG

(11) **EP 2 988 356 A1**
(43) Veröffentlichungstag der Anmeldung: **24.02.2016**
(21) Anmeldenummer: 14181292.5
(22) Anmeldetag: 18.08.2014
(51) Int. Cl.: H01M 10/04, H01M 2/16, B32B 38/18

(54) **Verfahren und Vorrichtung zur Herstellung eines galvanischen Elements sowie galvanisches Element**

(71) Anmelder: Manz AG, 72768 Reutlingen (DE)
(72) Erfinder: Enz, Bernd, 73779 Deizisau (DE); Legner, Steffen, 73479 Ellwangen (DE)
(74) Vertreter: Kohler Schmid Möbus Patentanwälte

(57) **Zusammenfassung**

Bei einem Verfahren zur Herstellung eines galvanischen Elements (1, 10, 20), welches Elektrodenblätter (3, 4) aufweist, wobei zumindest ein Blatt auf einem anderen Blatt abgelegt wird, wird vor dem Ablegen des einen Blatts auf dem anderen Blatt ein Additiv (5) auf das abzulegende Blatt und/oder ein bereits abgelegtes Blatt aufgebracht.

## Beschreibung

Die Erfindung betrifft ein Verfahren zur Herstellung eines galvanischen Elements, welches Elektrodenblätter aufweist, wobei zumindest ein Blatt auf einem anderen Blatt abgelegt wird.

Weiterhin betrifft die Erfindung ein galvanisches Element, umfassend zumindest zwei Blätter.

Darüber hinaus betrifft die Erfindung eine Vorrichtung zur Herstellung eines galvanischen Elements.

Galvanische Elemente bestehen häufig aus Stapeln aus Elektrodenblättern, insbesondere Anodenblättern und Kathodenblättern, wobei zwischen den Elektrodenblättern ein Separator vorgesehen ist. Dabei ist es bekannt, einen Stapel durch Ablage von Elektrodenblättern und Separatorblättern auf einer Stapelposition zu bilden. Nach Beendigung des Stapelvorgangs wird der gebildete Stapel durch eine Klemmvorrichtung fixiert oder durch Anbringen von zusätzlichen Klebebändern in Position gehalten.

Alternativ erfolgt die Stapelbildung durch Ablage von Elektrodenblättern, wobei der Separator als Bahnware z-förmig zwischen den einzelnen Elektrodenblättern hindurchgeführt wird. Während des Stapelvorgangs wird der aus Elektrodenblättern entstehende Stapel mit Haltefingern fixiert und nach Beendigung des Stapels durch Aufbringen eines zusätzlichen Klebebandes fixiert.

Aufgabe der vorliegenden Erfindung ist es, ein Verfahren und eine Vorrichtung bereitzustellen, mit denen die Stapelbildung vereinfacht werden kann.

Gelöst wird diese Aufgabe gemäß einem ersten Aspekt der Erfindung durch ein Verfahren zur Herstellung eines galvanischen Elements, welches Elektrodenblätter aufweist, wobei zumindest ein Blatt auf einem anderen Blatt abgelegt wird und wobei vor dem Ablegen des einen Blatts auf dem anderen Blatt ein Additiv auf das abzulegende Blatt und/oder ein bereits abgelegtes Blatt aufgebracht wird.

Vorzugsweise wird das Additiv auf die Unterseite eines abzulegenden Blatts aufgebracht, während dieses in Richtung Stapelposition bewegt wird. Dabei ist es denkbar, dass nur auf jedes zweite abzulegende Blatt Additiv aufgebracht wird. Insbesondere kann ein Blatt größer sein als das andere Blatt. Das größere Blatt kann das Additiv im Randbereich erhalten, sodass das kleinere Blatt, das ohne Additiv auf einem größeren Blatt abgelegt wurde, von dem Additiv des nächsten größeren Blatts eingeschlossen wird und somit zwischen den größeren Blättern gehalten ist.

Auf diese Art und Weise entsteht ein komplett verklebter Blätterstapel, insbesondere Elektrodenstapel, der in sich stabil ist, wodurch die einzelnen Elektrodenblätter ihre Lage beibehalten. Es ist keine zusätzliche Fixierung mittels eines Klebebandes notwendig. Der so entstehende Stapel kann durch die Verbindung für Folgeprozesse leichter gehandhabt werden, da der Stapel ein fester Verbund ist und sich die Position der Blätter nicht mehr verändert.

Gemäß einer bevorzugten Verfahrensvariante kann vorgesehen sein, dass das Additiv außerhalb eines elektrochemisch aktiven Bereichs eines Blatts aufgebracht wird. Somit wird der elektrochemisch aktive Bereich durch das Additiv nicht negativ beeinflusst. Weiterhin ist es möglich, dass beim Aufeinanderlegen der Blätter das Additiv eine Elektrode vollständig umschließt. Dadurch entsteht insbesondere für Kathoden ein Kurzschlussschutz.

Das Additiv kann punktförmig, gestrichelt oder in einer durchgehenden Linie aufgebracht werden. Die Art und Weise des Aufbringens des Additivs hängt davon ab, welche Art von Additiv verwendet wird. Als Additiv kann beispielsweise ein Klebstoff oder eine Flüssigdichtung verwendet werden.

Als Klebstoffe kommen beispielsweise Hotmelt-Kleber, lösungsmittelbasierte Kleber oder Zwei-Komponenten-Kleber in Frage.

Gemäß einer Verfahrensvariante können Elektrodenblätter und Separatorblätter abwechselnd abgelegt werden. Das Additiv kann entweder auf das Elektrodenblatt oder auf den Separator aufgebracht werden.

Weiterhin kann vorgesehen sein, dass als ein Blatt ein mit einem Separator laminiertes Elektrodenblatt verwendet wird und als weiteres Blatt ein Elektrodenblatt, die abwechselnd abgelegt werden. Das mit dem Separator laminierte Elektrodenblatt kann insbesondere auf zwei Seiten einen Separator aufweisen. Wenn bereits eine Elektrode mit einem Separator laminiert ist, müssen nur zwei unterschiedliche Blätter gestapelt werden, nämlich das mit dem Separator laminierte Elektrodenblatt und das weitere Elektrodenblatt, welches keinen Separator aufweist. Als Blatt im Sinne der vorliegenden Erfindung ist somit auch ein mit einem Separator laminiertes Elektrodenblatt zu verstehen.

Gemäß einer weiteren Verfahrensvariante kann vorgesehen sein, dass mehrere Blätter gestapelt werden, wobei vor dem Ablegen eines Blatts jeweils Additiv auf das zuvor abgelegte oder das abzulegende Blatt aufgebracht wird. Somit entsteht ein galvanisches Element mit mehreren Elektrodenblättern, zwischen denen jeweils eine Separatorschicht vorgesehen ist. Wenn die Blätter unterschiedlich groß sind, kann Additiv auch nur auf jedes zweite abgelegte oder abzulegende Blatt aufgebracht werden.

Besondere Vorteile des erfindungsgemäßen Verfahrens ergeben sich, wenn unterschiedlich große Blätter gestapelt werden. Dies ist mit dem Verfahren des Standes der Technik nahezu ausgeschlossen. Dadurch, dass erfindungsgemäß vorgesehen ist, Additiv zwischen Blätter einzubringen, können auch unterschiedlich große Blätter gestapelt werden. Dadurch kann eine Anpassung an den vorgesehenen Einbauraum des galvanischen Elements vorgenommen werden. Es besteht die Möglichkeit, so genannte 3D-Zellen zu bilden. Die Lage der einzelnen Elektrodenblätter muss während des Stapelvorgangs nicht durch zusätzliche Einrichtungen sichergestellt werden.

In den Rahmen der Erfindung fällt außerdem ein galvanisches Element, umfassend mehrere Blätter, wobei zumindest zwei Blätter durch ein Additiv verbunden sind. Vorzugsweise ist das galvanische Element gemäß dem erfindungsgemäßen Verfahren hergestellt. Ein so hergestelltes galvanisches Element ist als ein Teil zu handhaben, da die Elektrodenblätter miteinander verklebt sind.

Eine besonders gute Kurzschlussfestigkeit ergibt sich, wenn ein Elektrodenblatt des galvanischen Elements von dem Additiv umschlossen ist. Dadurch ergibt sich die Umschließung beim Stapeln automatisch, da das Additiv etwas fließen kann und vorzugsweise im elektrochemisch nicht aktiven Bereich aufgebracht wird. Das Additiv kann im gesamten Randbereich eines Blattes aufgebracht werden, sodass eine Elektrode eines weiteren Blatts vollständig durch das Additiv umschlossen werden kann.

Das galvanische Element besteht vorzugsweise aus mehreren Blättern, wobei zumindest zwei Elektrodenblätter und ein Separator vorgesehen sind.

Die Erfindung betrifft weiterhin eine Vorrichtung zur Herstellung eines galvanische Elements, insbesondere zur Durchführung des erfindungsgemäßen Verfahrens, wobei die Vorrichtung eine erste Handhabungseinheit zum Aufnehmen und Absetzen eines Blatts und eine zweite Handhabungseinheit zum Aufnehmen und Absetzen eines Blatts sowie eine Abgabeeinrichtung zur Abgabe eines Additivs auf einem Blatt aufweist. Mit einer solchen Vorrichtung können galvanische Elemente besonders einfach, schnell und zuverlässig hergestellt werden.

Gemäß einer Weiterbildung kann vorgesehen sein, dass die Vorrichtung eine Werkstückauflage, insbesondere Vakuumwerkstückauflage, aufweist. Mittels der Vakuumwerkstückauflage kann das unterste Blatt eines Stapels angesaugt werden, sodass dieses in seiner Position fixiert ist. Darauf können dann die weiteren Blätter aufgelegt werden.

Es kann mindestens ein Kamerasystem vorgesehen sein. Insbesondere kann ein Kamerasystem vorgesehen sein, um die Position eines Blattes zu erfassen, und zwar entweder, ehe das Blatt von einer Handhabungseinheit aufgenommen wird, oder wenn das Blatt auf einem Stapel, auf dem schon mehrere Blätter angeordnet sind, abgelegt wird. Auch zur Qualitätskontrolle kann das Kamerasystem eingesetzt werden.

Es können mehrere Vorrichtungen hintereinander angeordnet sein und die Werkstückauflage kann auf einem Transportsystem durch die hintereinander angeordneten Vorrichtungen transportiert werden. Dadurch kann ein Blätterstapel die gesamte Anlage mehrmals durchlaufen und können in jeder Vorrichtung zwei zusätzliche Blätter aufgelegt werden. Dabei kann jede Vorrichtung zwei Magazine aufweisen, wobei jedes Magazin einer Handhabungseinheit zugeordnet ist und die Handhabungseinheit Blätter aus einem Magazin aufnehmen und dann auf dem Blätterstapel ablegen kann.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: ein galvanisches Element, bestehend aus Elektrodenblättern und Separatoren;
- Fig. 2: eine Explosionsdarstellung zur Darstellung der Herstellung eines galvanischen Elements bestehend aus Elektroden, die mit einem Separator laminiert sind, und Elektroden ohne Separator;
- Fig. 3: eine Darstellung eines galvanischen Elements, welches gemäß der Vorgehensweise in Fig. 2 zusammengesetzt wurde;
- Fig. 4: eine Ansicht eines galvanischen Elements mit unterschiedlich großen Blättern;
- Fig. 5: eine Vorrichtung zur Herstellung eines galvanischen Elements;
- Fig. 6: mehrere hintereinander angeordnete Vorrichtungen zur Herstellung eines galvanischen Elements.

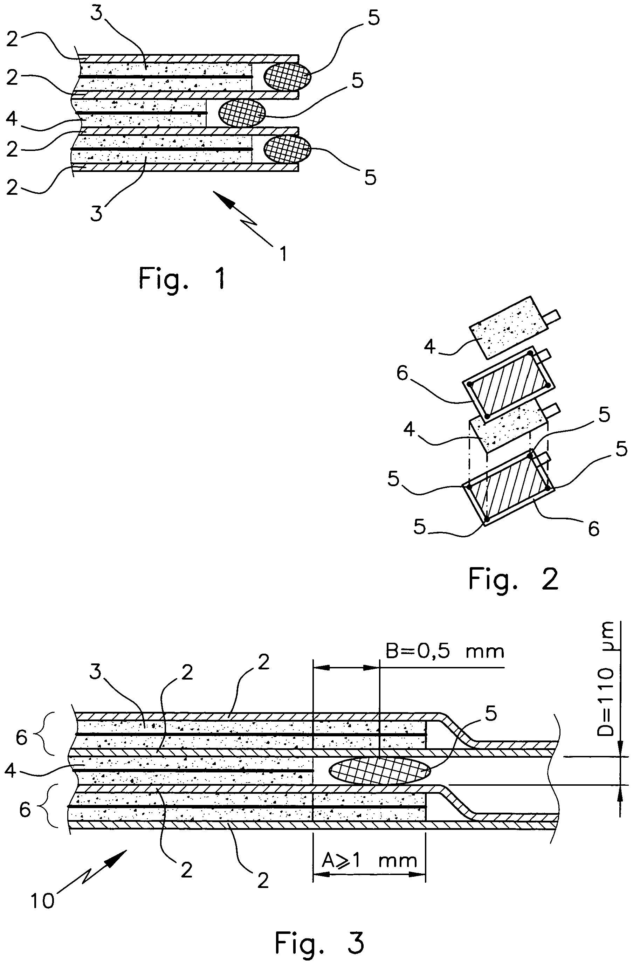

Die Fig. 1 zeigt ein galvanisches Element 1, welches Separatorblätter 2, Anodenblätter 3 und Kathodenblätter 4 aufweist. Zwischen zwei benachbarten Separatorblättern 2 ist jeweils ein Additiv 5 vorgesehen. Dabei kann es sich um einen Klebstoff oder eine Flüssigdichtung handeln. Durch das Additiv 5 werden jeweils zwei Separatorblätter 2 miteinander verbunden. Diese schließen ein Anodenblatt 3 oder ein Kathodenblatt 4 zwischen sich ein und fixieren dadurch deren Lage.

Bei der Ausführungsform gemäß der Fig. 2 sind Blätter 6 vorgesehen, bei denen ein Anodenblatt mit Separatorblättern laminiert ist. Weiterhin sind Elektrodenblätter 4 vorgesehen. Auf den Blättern 6 wird Additiv 5 aufgebracht, ehe das Elektrodenblatt 4 aufgelegt wird und anschließend ein weiteres Blatt 6 aufgelegt wird. Dadurch wird das Elektrodenblatt 4 zwischen den Blättern 6 eingeschlossen. Eine Fixierung der Blätter 4, 6 erfolgt ebenfalls durch das Additiv 5.

Die Fig. 3 zeigt ein galvanisches Element 10, welches gemäß dem Verfahren gemäß der Fig. 2 zusammengesetzt wurde. Hier ist zu erkennen, dass bei den Blättern 6 ein Anodenblatt 3 jeweils zwischen zwei Separatorblättern 2 eingeschlossen ist. Insbesondere sind die Separatorblätter 2 mit den Anodenblättern 3 laminiert. Die Blätter 6 sind größer als die Kathodenblätter 4. Dies bedeutet, dass das Additiv 5 in einem elektrochemisch nicht aktiven Bereich angeordnet ist. Der Überlappungsbereich A ist dabei vorzugsweise > 1 mm. Der Abstand B des Mittelpunkts des Additivs 5 während des Aufbringens von dem Kathodenblatt 4 ist vorzugsweise etwa 0,5 mm.

Die Dicke D des Kathodenblatts 4 ist im Ausführungsbeispiel etwa 110 µm. Bei dieser Vorgehensweise wird das Kathodenblatt 4 durch das Additiv 5 eingeschlossen, insbesondere, wenn das obere Blatt 6 auf das untere Blatt 6 aufgelegt wird. Auf das Kathodenblatt 4 selbst muss kein Additiv aufgebracht werden. Es wird jedoch umfangsmäßig von Additiv 5 umgeben, wenn das galvanische Element 10 fertiggestellt ist.

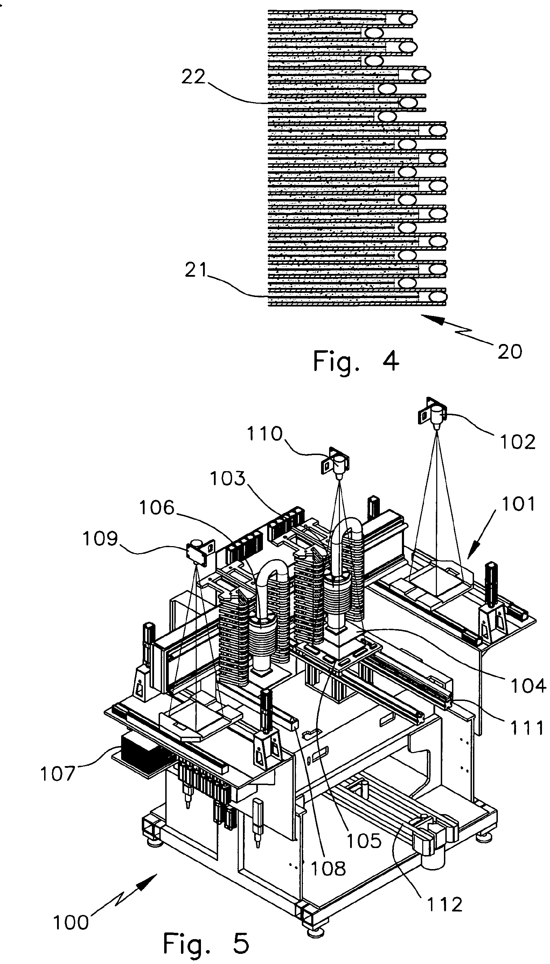

Die Fig. 4 zeigt ein Ausführungsbeispiel eines galvanischen Elements 20, bei dem unterschiedlich große Blätter 21, 22 aufeinander gestapelt sind.

Die Fig. 5 zeigt eine Vorrichtung 100 zur Herstellung eines galvanischen Elements. In einem ersten Magazin 101 ist eine erste Art von Blättern bevorratet. Über ein Kamerasystem 102 kann die Position der Blätter im Magazin 101 und deren Beschaffenheit überwacht werden. Mit einer ersten Handhabungseinheit 103, die einen Vakuumgreifer umfassen kann, können Blätter der ersten Art vom Magazin 101 entnommen werden und auf einem Stapel 104, der auf einem Werkstückträger 105 angeordnet ist, abgelegt werden. Der Werkstückträger 105 ist vorzugsweise als Vakuumwerkstückträger ausgebildet.

Mittels einer zweiten Handhabungseinheit 106 können Blätter einer zweiten Art von einem Magazin 107 entnommen werden. Die Handhabungseinheit 106 weist ebenfalls vorzugsweise einen Vakuumgreifer auf. Auf dem Weg vom Magazin 107 zum Werkstückträger 105 gelangt die Handhabungseinheit 106 an einer Abgabeeinrichtung 108 vorbei, mittels derer ein Additiv auf das aus dem Magazin 107 entnommene Blatt aufgetragen wird, ehe dieses auf dem Stapel 104 mittels der Handhabungseinheit 106 positioniert wird. Ein Kamerasystem 109 dient der Überwachung der Blätter im Magazin 107, während ein Kamerasystem 110 die korrekte Positionierung der Blätter auf dem Stapel 104 überwacht.

Der Werkstückträger 105 ist entlang einer Transporteinrichtung 111 bewegbar. Insbesondere kann der Werkstückträger 105 entlang der Transporteinrichtung 111 zu einer weiteren Vorrichtung entsprechend der Vorrichtung 100 transportiert werden. Ein Rücktransport des Werkstückträgers 104 kann auf der Transporteinrichtung 112 erfolgen.

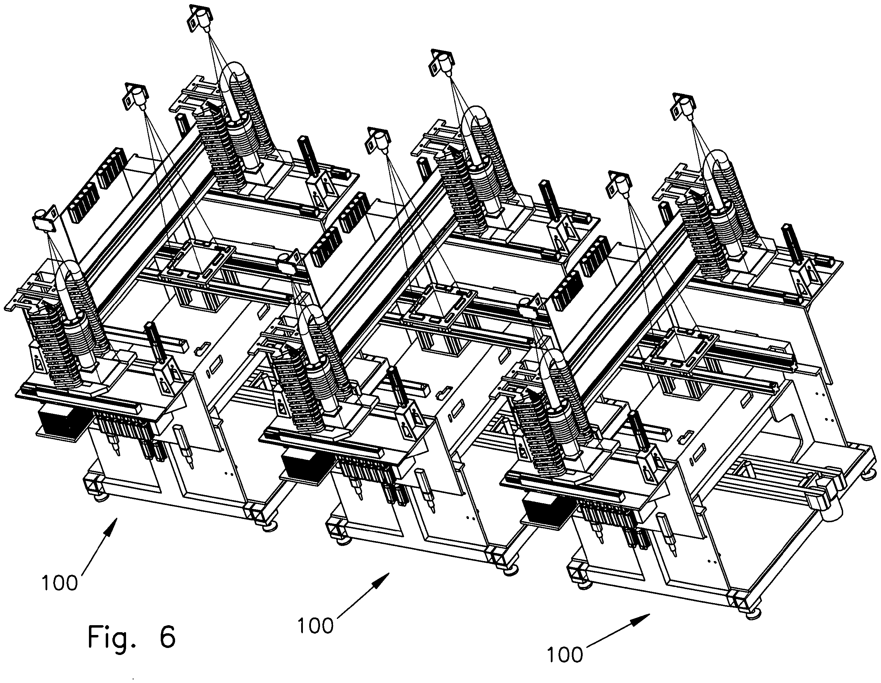

Die Fig. 6 zeigt eine Anordnung bestehend aus mehreren Vorrichtungen 100, die hintereinander angeordnet sind. Der Werkstückträger 105 kann von einer Vorrichtung 100 zur nächsten transportiert werden. In jeder Vorrichtung 100 können zwei Blätter aufgelegt werden. Ein Werkstückträger kann die in der Fig. 6 gezeigte Anlage mehrmals durchlaufen, bis ein galvanisches Element vollständig hergestellt wurde.

## Patentansprüche

1. Verfahren zur Herstellung eines galvanischen Elements (1, 10, 20), welches Elektrodenblätter (3, 4) aufweist, wobei zumindest ein Blatt auf einem anderen Blatt abgelegt wird, **dadurch gekennzeichnet, dass** vor dem Ablegen des einen Blatts auf dem anderen Blatt ein Additiv (5) auf das abzulegende Blatt und/oder ein bereits abgelegtes Blatt aufgebracht wird.

2. Verfahren nach Anspruch 1, **dadurch gekennzeichnet, dass** das Additiv (5) außerhalb eines elektrochemisch aktiven Bereichs eines Blatts aufgebracht wird.

3. Verfahren nach einem der vorhergehenden Ansprüche, **dadurch gekennzeichnet, dass** das Additiv (5) auf jedes zweite abgelegte oder abzulegende Blatt aufgebracht wird.

4. Verfahren nach einem der vorhergehenden Ansprüche, **dadurch gekennzeichnet, dass** das Additiv (5) punktförmig, gestrichelt oder in einer durchgehenden Linie aufgebracht wird.

5. Verfahren nach einem der vorhergehenden Ansprüche, **dadurch gekennzeichnet, dass** als Additiv (5) ein Klebstoff oder eine Flüssigdichtung verwendet wird.

6. Verfahren nach einem der vorhergehenden Ansprüche, **dadurch gekennzeichnet, dass** Elektrodenblätter (3, 4) und Separatorblätter (2) abwechselnd abgelegt werden.

7. Verfahren nach einem der vorhergehenden Ansprüche, **dadurch gekennzeichnet, dass** als ein Blatt (6) ein mit einem Separator (2) laminiertes Elektrodenblatt (3) verwendet wird und als weiteres Blatt ein Elektrodenblatt (4), die abwechselnd abgelegt werden.

8. Verfahren nach einem der vorhergehenden Ansprüche, **dadurch gekennzeichnet, dass** unterschiedlich große Blätter (21, 22) gestapelt werden.

9. Galvanisches Element umfassend mehrere Blätter (3, 4, 6, 21, 22), wobei zumindest zwei Blätter (3, 4, 6, 21, 22) durch ein Additiv (5) verbunden sind.

10. Galvanisches Element nach Anspruch 9, **dadurch gekennzeichnet, dass** ein Elektrodenblatt (4) des galvanischen Elements (10) von dem Additiv (5) umschlossen ist.

11. Galvanisches Element, **dadurch gekennzeichnet, dass** es aus mehreren Blättern (3, 4, 6, 21, 22) besteht, wobei zumindest zwei Elektrodenblätter (3, 4) und ein Separator (2) vorgesehen sind.

12. Vorrichtung (100) zur Herstellung eines galvanischen Elements, insbesondere zur Durchführung des Verfahrens nach einem der Ansprüche 1 bis 8, **dadurch gekennzeichnet, dass** die Vorrichtung eine erste Handhabungseinheit (103) zum Aufnehmen und Absetzen eines Blatts und eine zweite Handhabungseinheit (106) zum Aufnehmen und Absetzen eines Blatts sowie eine Abgabeeinrichtung (108) zur Abgabe eines Additivs auf einem Blatt aufweist.

13. Vorrichtung nach Anspruch 12, **dadurch gekennzeichnet, dass** die Vorrichtung eine Werkstückauflage (105), insbesondere Vakuumwerkstückauflage, aufweist.

14. Vorrichtung nach einem der vorhergehenden Ansprüche 12 oder 13, **dadurch gekennzeichnet, dass** zumindest ein Kamerasystem (102, 109, 110) vorgesehen ist.

15. Vorrichtung nach einem der vorhergehenden Ansprüche, **dadurch gekennzeichnet, dass** mehrere Vorrichtungen (100) hintereinander angeordnet sind und die Werkstückauflage (105) auf einem Transportsystem (111) durch die hintereinander angeordneten Vorrichtungen (100) transportierbar ist.
